(19) Europäisches Patentamt
European Patent Office
Office européen des brevets

(11) EP 4 080 894 A1

(12) EUROPEAN PATENT APPLICATION
published in accordance with Art. 153(4) EPC

(43) Date of publication:
26.10.2022 Bulletin 2022/43

(51) International Patent Classification (IPC):
H04N 21/2668 (2011.01)      H04N 21/234 (2011.01)
H04N 21/81 (2011.01)

(21) Application number: 20903782.9

(52) Cooperative Patent Classification (CPC):
G06Q 30/02; H04L 9/40; H04N 5/265;
H04N 21/234; H04N 21/2668; H04N 21/81;
H04N 21/84; H04N 21/845

(22) Date of filing: 01.12.2020

(86) International application number:
PCT/CN2020/133131

(87) International publication number:
WO 2021/121026 (24.06.2021 Gazette 2021/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 16.12.2019 CN 201911294192

(71) Applicant: ZTE Corporation
Shenzhen, Guangdong 518057 (CN)

(72) Inventor: CHEN, Bin
Shenzhen, Guangdong 518057 (CN)

(74) Representative: Mozzi, Matteo et al
Jacobacci & Partners S.p.A.
Via Senato, 8
20121 Milano (IT)

(54) **ADVERTISEMENT INSERTION METHOD, ELECTRONIC DEVICE AND STORAGE MEDIUM**

(57) Embodiments of the present invention relate to the field of communications, and disclose an advertisement insertion method, an electronic device and a storage medium. The method in the present invention is applied to a streaming media server, and includes: receiving a playing request of a program sent by a client; determining an advertisement that needs to be inserted in the program; according to an advertisement insertion strategy carried in the playing request of the program, splicing a description file of the advertisement with a description file of the program; and sending a description file obtained by splicing to the client, so that the client performs playing according to the description file obtained by splicing. The streaming media server completes the splicing processing of the description file of the program and the description file of the advertisement, and the client performs playing according to the received spliced description file, thereby avoiding phenomena in the prior art such as black screen and circling during the switching and playing of the advertisement and program, when the client respectively receives advertisement and program playing addresses to implement advertisement insertion.

Fig. 3

EP 4 080 894 A1

## Description

## Technical Field

Embodiments of the present invention relate to the field of communications, and in particular, to an advertisement insertion method, an electronic device and a storage medium.

## Background

Video advertisements are a major profit source for video content service providers, so advertisements are inserted in many program contents. In the current advertisement inter-cut process, a client needs to depend on an advertisement server and a program service platform, that is, the client needs to acquire program playing information from the program service platform, acquire advertisement playing information from the advertisement server, and control the switching and playing of programs and advertisements, so as to achieve advertisement playing.

The inventors found that in the prior art, when the client controls the switching and playing of the programs and advertisements, the switching process takes time, which may easily lead to unsmooth playing of the advertisements and programs, and even undesirable phenomena such as black screen and circling.

## Summary

The purpose of the embodiments of the present invention is to provide an advertisement insertion method, an electronic device and a storage medium, which can avoid phenomena such as black screen and circling during advertisement inter-cut.

In order to solve the above technical problems, the embodiments of the present invention provide an advertisement insertion method, which is applied to a streaming media server, including: a playing request of a program sent by a client is received; an advertisement that needs to be inserted in the program is determined; according to an advertisement insertion strategy carried in the playing request of the program, a description file of the advertisement is spliced with a description file of the program; and a description file obtained by splicing is sent to the client, so that the client performs playing according to the description file obtained by splicing.

The embodiments of the present invention further provide an advertisement insertion method, which is applied to a service platform, including: an advertisement insertion strategy is generated according to a playing request of a program sent by a client; and the advertisement insertion strategy is sent to the client, so that the client sends the playing request of the program that carries the advertisement insertion strategy to a streaming media server.

The embodiments of the present invention further provide an electronic device, including: at least one processor, and a memory in communication connection with the at least one processor, wherein the memory stores instructions executable by the at least one processor, and the instructions are executed by the at least one processor, so that the at least one processor can execute the above-mentioned advertisement insertion method.

The embodiments of the present invention further provide a computer-readable storage medium, on which a computer program is stored, wherein when executed by a processor, the computer program implements the above-mentioned advertisement insertion method.

Compared with the related art, in the embodiments of the present invention, the streaming media server completes the splicing of the description file of the advertisement and the description file of the program, and sends the description file obtained by splicing to the client, so that the client can perform direct playing according to the description file obtained by splicing. That is to say, on the basis of the description file obtained by splicing, the client can download a program code stream and an advertisement code stream by means of the same code stream channel, instead of respectively acquiring the program code stream and the advertisement code stream by switching a code stream pipeline as in the prior art, and a switching moment needs to be controlled. Therefore, in the embodiments of the present invention, after the streaming media server splices the description file of the advertisement with the description file of the program, the program code stream and the advertisement code stream can belong to the same code stream pipeline and are played by the client. In this way, it is possible to avoid phenomena such as black screen and circling in advertisement inter-cut because the code stream pipeline needs to be switched to download the program and the advertisement. At the same time, after receiving the spliced description file, the client can download the code streams and play the same without switching and controlling the program code stream and the advertisement code stream. Therefore, by means of the embodiments of the present invention, the implementation of the client is simpler, and correspondingly, the processing capability of the streaming media server can be enhanced.

In an embodiment, the advertisement insertion strategy includes: an insertion time point of the advertisement in the program, and an insertion time length of the advertisement corresponding to the insertion time point. By means of the present embodiment, an advertisement of a specific time length can be inserted at a specific time point of a program.

In an embodiment, the step of according to the advertisement insertion strategy carried in the playing request of the program, splicing the description file of the advertisement with the description file of the program includes: identifying a splicing location of the advertisement in the description file of the program, wherein the total time length of program fragments described by the description file of the program on the splicing location matches the insertion time point; recognizing an advertisement description part to be spliced from the description file of the advertisement, wherein the total time length of advertisement fragments described by the advertisement description part matches the insertion time length; and splicing the advertisement description part on the splicing location in the description file of the program. The streaming media server determines, by using an advertisement playing strategy, the splicing location and the advertisement description part to be spliced, and splices the advertisement description part to be spliced on the splicing location in the description file of the program. By means of the present embodiment, it is possible to simplify the splicing process of the description file of the advertisement and the description file of the program.

In an embodiment, the step of recognizing the splicing location of the advertisement in the description file of the program includes: according to the sequence of the program fragments described in the description file of the program, accumulating the time lengths of the program fragments one by one; and if the total time length obtained by the present accumulation matches the insertion time point, taking, as the splicing location, a description location of the currently accumulated program fragments in the description file of the program. In the present embodiment, by accumulating the time lengths of the program fragments described in the description file of the program, and determining the splicing location in combination with the insertion time point, it is possible to accurately recognize the splicing location of the advertisement description part.

In an embodiment, the step of recognizing the advertisement description part to be spliced from the description file of the advertisement includes: according to the sequence of the advertisement fragments described in the description file of the advertisement, accumulating the time lengths of the advertisement fragments one by one; and if the total time length obtained by the present accumulation matches the insertion time length, taking, as the advertisement description part to be spliced, description information of the advertisement fragments corresponding to the total time length. In the present embodiment, by accumulating the time lengths of the advertisement fragments in the description file of the advertisement, and determining the advertisement description part in combination with the insertion time length, it is possible to accurately recognize the description information in the description file of the advertisement to be spliced.

In an embodiment, the playing request of the program further carries attribute information of the client, and the step of determining the advertisement that needs to be inserted in the program includes: in combination with the attribute information of the client, querying, from an advertisement operator, the advertisement that needs to be inserted in the program. The advertisement operator will push different advertisements for different clients according to an advertisement operation strategy, and the streaming media server obtains, from the advertisement operator, the advertisement that needs to be inserted in the program. By means of the present embodiment, different advertisement services can be provided for different clients.

In an embodiment, the step of receiving the playing request of the program sent by the client includes: receiving the playing request of the program sent by the client by means of an edge node in a content distribution network. The step of sending the description file obtained by splicing to the client includes: sending the description file obtained by splicing to the client by means of the edge node, so that the edge node stores the description file obtained by splicing, and returns the stored description file obtained by splicing to the client upon receiving the playing request of the program the next time. The edge node in the content distribution network can store the description file obtained by splicing, and can return, to the client, the previously stored description file obtained by splicing upon receiving the playing request of the program the next time, such that the streaming media server does not need to generate the description file again. Accordingly, the workload of the streaming media server can be relieved, and the feedback is faster.

## Brief Description of the Drawings

One or more embodiments are exemplarily illustrated by figures in corresponding drawings, and these exemplary illustrations do not constitute limitations of the embodiments, elements with the same reference signs in the drawings are denoted as similar elements, and unless otherwise stated, the figures in the drawings do not constitute limitations.

Fig. 1 is a schematic diagram of an advertisement inter-cut service framework in a first embodiment of the present invention;

Fig. 2 is a schematic structural diagram of a streaming media server in the first embodiment of the present invention;

Fig. 3 is a flow diagram of an advertisement insertion method in the first embodiment of the present invention;

Fig. 4 is a schematic diagram of splicing an advertisement code stream with a program code stream in the first embodiment of the present invention;

Fig. 5 is a relationship diagram of a first-level description file and a second-level description file in the first embodiment of the present invention;

Fig. 6 is a flow diagram of an advertisement insertion method in a second embodiment of the present invention;

Fig. 7 is a flow diagram of an advertisement insertion method in a third embodiment of the present invention; and

Fig. 8 is a schematic structural diagram of an electronic device in a fourth embodiment of the present invention .

## Detailed Description of the Embodiments

In order to make the objectives, technical solutions and advantages of the embodiments of the present invention more clear, various embodiments of the present invention will be described in detail below with reference to the drawings. However, those of ordinary skill in the art can understand that, in the various embodiments of the present invention, many technical details are provided for readers to better understand the present invention. However, even without these technical details and various changes and modifications based on the following embodiments, the technical solutions claimed in the present invention can be implemented. The following divisions of the various embodiments are for the convenience of description, and should not constitute any limitation on the specific implementation of the present invention, and the various embodiments can be combined with each other and referred to each other on the premise of not contradicting each other.

A first embodiment of the present invention relates to an advertisement insertion method, which is applied to a streaming media server. According to an advertisement playing strategy carried in a playing request of a program sent by a client, the streaming media server splices a description file of an advertisement that needs to be inserted in the program with a description file of the program, and sends a description file obtained by splicing to the client. The implementation details of a data processing method of the present embodiment will be specifically described below, and the following contents are only implementation details provided for the convenience of understanding, and are not necessary for implementing the present solution.

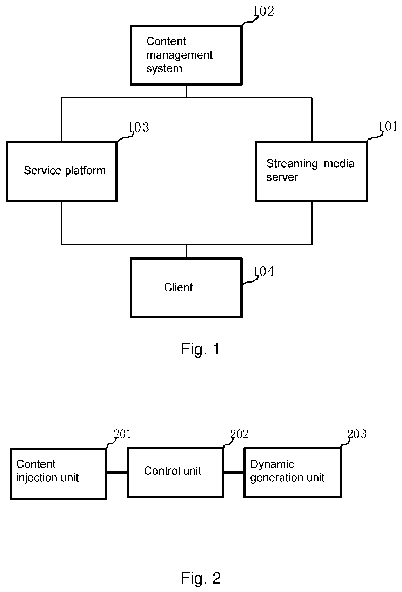

In the present embodiment, the advertisement insertion method can be applied to the field of over the top (OTT). An advertisement inter-cut service framework shown in Fig. 1 includes a streaming media server 101, a content management system 102, a service platform 103 and a client 104, wherein the content management system 102 is responsible for providing a program an advertisement for the service platform 103 and the streaming media server 101. Specifically, the service platform 103 can acquire attribute information of the program from the content management system 102, such as a program name and a program type; and the streaming media server 101 can receive the content of the program and advertisement from the content management service system 102, and process the program and the advertisement into program fragments and advertisement fragments and store the program fragments and the advertisement fragments locally.

A schematic structural diagram of the streaming media server 101 is shown in Fig. 2, and the streaming media server 101 includes: a content injection unit 201, a control unit 202 and a dynamic generation unit 203, wherein the content injection unit 201 is configured to process the program and the advertisement, which are injected by the content management system 102, into fragment files and store the fragment files; the dynamic generation unit 203 is configured to, after the streaming media server 101 receives the playing request of the program, splice the description file of the advertisement with the description file of the program; and the control unit 202 is configured to, during the process when the dynamic generation unit 203 splices the description file of the advertisement with the description file of the program, recognize a splicing location of the advertisement in the description file of the program, and recognize an advertisement description part to be spliced from the description file of the advertisement.

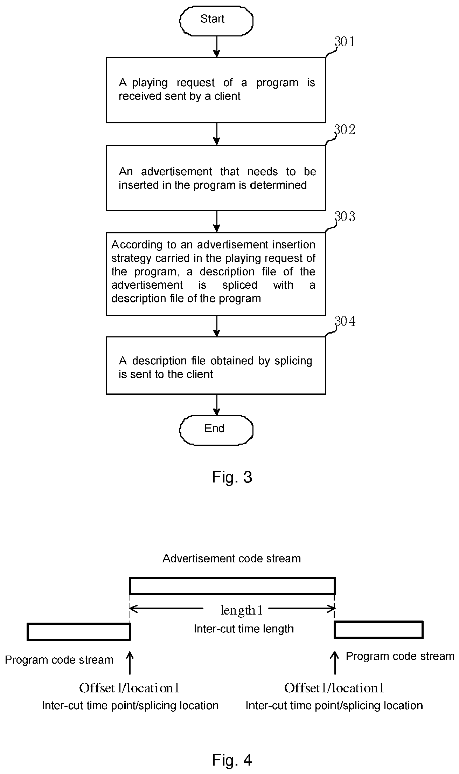

The specific process of the advertisement insertion method in the present embodiment is shown in Fig. 3, including:
Step 301, a playing request of a program is received sent by a client.

Herein, the playing request of the program carries an advertisement insertion strategy. Specifically, when playing the program, the client 104 sends a program query request to the service platform 103 by using a communication protocol, wherein the communication protocol includes a hypertext transfer protocol, a hypertext transfer security protocol and the like, which is not limited herein; the service platform 103 returns program information to the client 104 after receiving the program query request, and the program information includes the advertisement insertion strategy and a uniform resource locator of the program; and then, the client 104 sends the playing request of the program to the streaming media server 101, and the playing request of the program carries the advertisement insertion strategy and the uniform resource locator of the program, such that the streaming media server 101 can also receive the playing request of the program sent by the client 104. The client 104 includes a mobile phone, a TV, a set-top box, a computer, and so on, which is not limited herein.

It should be noted that, the client 104 can splicing the advertisement insertion strategy with the uniform resource locator of the program. Assuming that the advertisement insertion strategy includes an insertion time point offset1 of the advertisement in the program, and an insertion time length length1 of the advertisement corresponding to the insertion time point, and offset1 =60s, length1=120s, then the uniform resource locator of the spliced program can be expressed, on the basis of the communication protocol, as: HTTP://ip: port/001/contentcode/index. m3u8? userid = *xxx&InserADInfo* = "60|120 " or, HTTPS://ip: port/001/contentcode/index. m3u8?userid = *xxx&InserADInfo* = "601120, that is, the insertion time point in the advertisement insertion strategy and the insertion time length of the advertisement corresponding to the insertion time point are spliced behind the uniform resource locator of the program. In practical applications, if the advertisement insertion strategy is spliced at other locations of the uniform resource locator of the program, it should also fall within the protection scope.

Step 302, an advertisement that needs to be inserted in the program is determined.

In a specific example, after receiving the playing request of the program, the streaming media server 101 searches the advertisement that needs to be inserted in the program from an advertisement operator. Specifically, after receiving the playing request of the program, the streaming media server 101 initiates a request for obtaining the advertisement corresponding to the program to the advertisement operator and the request carries an identifier of the program, and the advertisement operator matches the corresponding advertisement for the program according to the identifier of the program. The specific method can be: a corresponding relationship between the program and the advertisement is determined in an advertisement operation strategy formulated by the advertisement operator. For example, a program 1 corresponds to an advertisement a, then the advertisement operator can find the advertisement corresponding to the program according to the corresponding relationship. Then, the advertisement operator can return relevant information of the advertisement to the streaming media server 101, wherein the relevant information of the advertisement can be the identifier of the advertisement, the type of the advertisement and so on, which is not limited herein.

In a specific example, after receiving the playing request of the program, the streaming media server 101 can also match the corresponding advertisement for the program by itself according to the identifier of the program and in combination with the advertisement operation strategy. Herein the manner of acquiring the advertisement operation strategy can be: the streaming media server 101 acquires the advertisement operation strategy from the advertisement operator in advance, or periodically and actively acquires the advertisement operation strategy from the advertisement operator, or the advertisement operator notifies the streaming media server 101 to acquire the advertisement operation strategy after updating the advertisement operation strategy, which is not limited herein.

In a specific example, the playing request of the program sent by the client 104 carries attribute information of the client 104, and the streaming media server 101 can query, from the advertisement operator, the advertisement that needs to be inserted in the program in combination with the attribute information of the client 104. That is to say, the streaming media server 101 can initiate a request for obtaining the advertisement corresponding to the program to the advertisement operator, the request carries the identifier of the program and the attribute information of the client 104, the advertisement operator matches the corresponding advertisement for the program according to the identifier of the program and the attribute information of the client 104, and returns the relevant information of the advertisement to the streaming media server 101, so as to provide different advertisement services for different clients 104. Herein the specific manner of the advertisement operator for matching the corresponding advertisement for the program can be: a corresponding relationship among the type of the client 104, the program and the advertisement is determined in the advertisement operation strategy formulated by the advertisement operator, for example, a program 1 and a first type of client 104 correspond to the advertisement a, the advertisement operator classifies the client 104 by analyzing the attribute information of the client 104, and determines the advertisement that needs to be inserted in the program according to the corresponding relationship; or, the advertisement operator queries a watching history of the client 104, and analyzes the preference of the client 104 for watching programs, so as to match the corresponding advertisement therefor. The above two examples are only for illustration, and are not necessary for implementing the present embodiment.

In a specific example, the streaming media server 101 can match the corresponding advertisement for the program by itself according to the identifier of the program carried in the playing request of the program and the attribute information of the client 104, and in combination with the advertisement operation strategy, so as to provides different advertisement services for different clients 104. The manner of the streaming media server 101 for acquiring the advertisement operation strategy has been described above, and thus will not be repeated herein.

Step 303, according to an advertisement insertion strategy carried in the playing request of the program, a description file of the advertisement is spliced with a description file of the program.

In a specific example, the streaming media server 101 stores the description file of the program and the description file of the advertisement corresponding to the program, and the advertisement insertion strategy includes an insertion time point of the advertisement in the program, and an insertion time length of the advertisement corresponding to the insertion time point. The streaming media server 101 first recognizes a splicing location of the advertisement in the description file of the program, recognizes an advertisement description part to be spliced from the description file of the advertisement, and then splices the advertisement description part on the splicing location in the description file of the program, wherein the total time length of program fragments described by the description file of the program on the splicing location matches the insertion time point, and the total time length of advertisement fragments described by the advertisement description part matches the insertion time length. Specifically, according to the sequence of the program fragments described in the description file of the program, the streaming media server 101 accumulates the time lengths of the program fragments one by one, and if the total time length obtained by the present accumulation matches the insertion time point, takes a description location of the currently accumulated program fragments in the description file of the program as the splicing location. As shown in Fig. 4, it is a schematic diagram of splicing an advertisement code stream with a program code stream. Assuming that the insertion time point offset1 is 60s, the time length of each program fragment is 10s, and when the streaming media server 101 accumulates to the sixth program fragment, the total time length, that is, 60s, of the program fragments matches offset1, then the streaming media server 101 can take the description location of the currently accumulated six program fragments in the description file of the program as the splicing location. In an embodiment, according to the sequence of the advertisement fragments described in the description file of the advertisement, the streaming media server 101 can accumulate the time lengths of the advertisement fragments one by one, and if the total time length obtained by the present accumulation matches the insertion time length, take description information of the advertisement fragments corresponding to the total time length as the advertisement description part to be spliced. Assuming that the insertion time length length1 of the advertisement corresponding to the insertion time offset1 is 120s, when the streaming media server 101 accumulates to the 12th advertisement fragment, the total time length, that is, 120s, of the advertisement fragments matches length1, then the streaming media server 101 can take the description information of the advertisement fragments corresponding to the total time length that is, 120s as the advertisement description part to be spliced; and after determining the splicing location and the advertisement description part in the description file of the program, the streaming media server 101 can splice the advertisement description part on the splicing location in the description file of the program, so as to complete the splicing of the description file of the advertisement and the description file of the program. Further, the streaming media server 101 can perform accumulation according to a preset accumulation rule, and the accumulation rule can be expressed as:

$$\text{Time} = \sum_{i=1}^{n} \sum_{j=1}^{m} \text{BaseSliceTime}$$, wherein n represents the number of description files contained in the description file of the program/advertisement, m represents the number of fragments in a description file, i represents the ith description file, j represents the jth fragment, BaseSliceTime represents the time length of the fragment, which is generally 10s, i is less than or equal to n, and j is less than or equal to m.

It should be noted that, the streaming media server 101 can specify the time length of each program/advertisement fragment, and the description file of each program/advertisement can describe the number of program/advertisement fragments. Assuming that the time length of each program/advertisement fragment is 10s, the description file of the program/advertisement is an M3U8 description file, and the description file of each program/advertisement can describe at most 10 fragments, for an advertisement with a total time length of 120s, 12 advertisement fragments need to be described by two description files. In practical applications, there may be a delay in sending the playing request of the program due to a poor network state, the streaming media server 101 can adjust the time length of the program/advertisement fragment according to the current network state, for example: a basic fragment time length is 10s, due to the poor network state at present, in order to ensure the viewing experience of the client 104, the streaming media server 101 adjusts the time length of each program/advertisement fragment to 6s. Since the time length of the generated program/advertisement fragment has changed, the accumulation rule can also be modified accordingly. For example, an adjustment factor is added into the accumulation rule, and a certain delay and residual time are set by means of the adjustment factor, so as to reduce the influence brought by changes in the network state. The accumulation rule with the adjustment factor added can be expressed as:

$$\text{Time} = \sum_{i=1}^{n} \sum_{j=1}^{m} ( \alpha_j * \text{BaseSliceTime} + \sigma )$$, wherein $\alpha_j$ and $\sigma$ represent impact factors, n represents the number of description files contained in the description file of the program/advertisement, m represents the number of fragments in a description file, i represents the ith description file, j represents the jth fragment, BaseSliceTime represents the time length of the fragment, which is generally 10s, i is less than or equal to n, and j is less than or equal to m.

In a specific example, the streaming media server 101 generates the description information of the program/advertisement while accumulating the time lengths of the program/advertisement fragments, so as to recognize the splicing location and determine whether the advertisement description part has been spliced in the process of generating the description information of the program/advertisement. Specifically, it is assumed that there is an insertion time point offset1, and a playing time length length1 of the advertisement corresponding to offset1, wherein offset1 indicates that the insertion time point is 60s, and length1 indicates that the playing time length of the advertisement is 120s. The time length of each fragment stored in the streaming media server 101 is 10s. After receiving the playing request of the program, the streaming media server 101 can generate the description information of the program, accumulate the time lengths of the program fragments one by one according to the sequence of the program fragments described in the description information of the program, and if the total time length obtained by the present accumulation matches the insertion time point offset1, for example: according to the sequence of the program fragments described in the description information of the program, the streaming media server accumulates to the 6th program fragment, that is, the total time length of the accumulated program fragments is 60s, then the streaming media server takes the description location as a splicing location location1 at this time. Thereafter, the streaming media server 101 generates the description information of the advertisement on location1, accumulates the time lengths of the advertisement fragments one by one according to the sequence of the advertisement fragments described in the description information of the advertisement, if the total time length obtained by the present accumulation matches the insertion time length length1, for example: the streaming media server accumulates to the 12th advertisement fragment, that is, the total time length of the accumulated advertisement fragments is 120s, then the streaming media server 101 determines that the splicing the advertisement description part to be spliced is completed, and finally, after the the advertisement description part, the streaming media server 101 continues to generate the description information of the program behind location 1. Assuming that the time length of the entire program is 200s, it can be seen from the above description that the streaming media server 101 has generated the description information of the program before 60s, then the total time length obtained by the present accumulation is 140s, which indicates that the splicing the description information of the program is completed, such that the splicing of the description file of the advertisement and the description file of the program is completed. The description file can be an M3U8 description file, which is not limited herein.

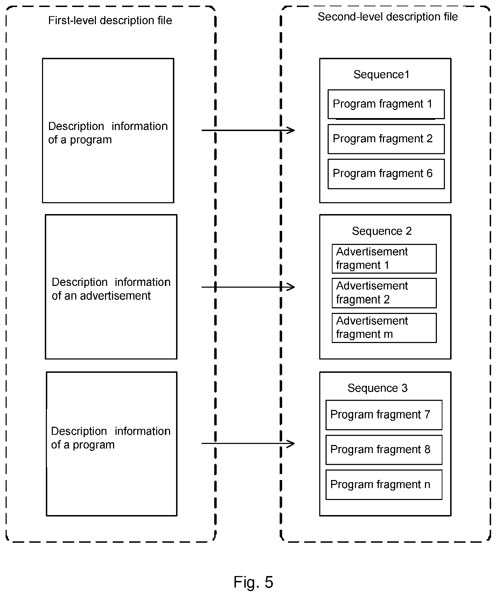

Further, the description file spliced by the streaming media server 101 can be a first-level description file and/or a multi-level description file, as long as the client 104 can perform playing according to the description file obtained by splicing. Here, a first-level description file and a second-level description file are taken as an example. As shown in Fig. 5, it is a relationship diagram of the first-level description file and the second-level description file. The first-level description file contains the description information of the program and the description information of the advertisement. Assuming that the description file of the advertisement is spliced into the description file of the program, as shown in Fig. 5, both a first part and a third part in the first-level description file are description information of the program, the first part and the third part together form the description information of the program, and a second part is the description information of the advertisement, that is, the advertisement description part. The description information about the program fragments described by sequence1 in the second-level description file corresponds to the first part of the first-level description file, for example: the first part corresponds to the description information of the program before location1 of the program, that is, it describes the description information about the first to sixth program fragments, and then the description information about the first to sixth program fragments is also described in sequence1; and the second part and the third part are similar to the first part, and thus will not be repeated herein.

It should be noted that, in practical applications, the advertisement insertion strategy can contain a plurality of insertion time points, and insertion time lengths of the advertisement corresponding to these insertion time points respectively, such as offset1-length1, offset2-length2 and offset3-length3, which is not limited herein. If there are a plurality of insertion time points and insertion time lengths of the advertisement corresponding to these insertion time points respectively, the streaming media server 101 can also use a method similar to the above example to complete the splicing of the description file of the program and the description file of the advertisement, which will not be repeated herein.

Step 304, a description file obtained by splicing is sent to the client.

Specifically, the streaming media server 101 sends the description file obtained by splicing to the client 104, so that the client 104 performs playing according to the description file obtained by splicing.

In a specific example, after receiving the description file obtained by splicing and sent by the streaming media server 101, the client 104 can request the program fragments and the advertisement fragments described therein, download the corresponding program fragments and advertisement fragments from the streaming media server 101 according to indexes in the description file, and perform playing.

In the present embodiment, the streaming media server 101 completes the splicing of the description file of the advertisement and the description file of the program, and sends the spliced description file to the client 104, that is, the client 104 can play the program and the advertisement according to the received spliced description file without splicing the program with the advertisement. Therefore, by means of the present embodiment, it is possible to avoid phenomena such as black screen and circling in the process of inserting the advertisement in the program.

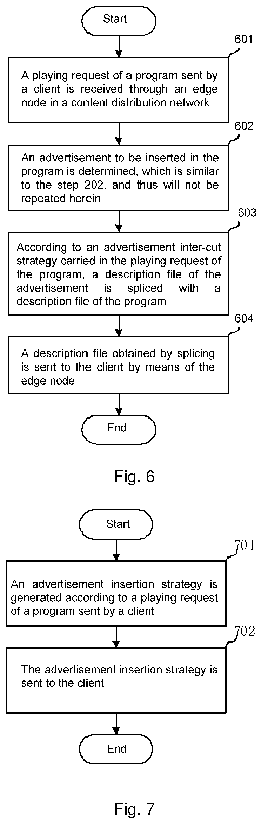

A second embodiment of the present invention relates to an advertisement insertion method. The second embodiment is roughly the same as the first embodiment, the main difference lies in that: in the second embodiment of the present invention, the streaming media server 101 receives the playing request of the program sent by the client 104 by means of an edge node in a content distribution network; the streaming media server 101 sends the description file obtained by splicing to the client 104 by means of the edge node, and the edge node stores the description file obtained by splicing, and can return the stored description file obtained by splicing to the client 104 upon receiving the same playing request of the program the next time. The implementation details of the data processing method of the present embodiment will be specifically described below, and the following contents are only implementation details provided for the convenience of understanding, and are not necessary for implementing the present solution. The specific process is shown in Fig. 6, including:

Step 601, a playing request of a program sent by a client is received through an edge node in a content distribution network.

Specifically, the edge node in the content distribution network receives the playing request of the program sent by the client 104, and forwards the playing request of the program to the streaming media server 101.

Step 602, an advertisement to be inserted in the program is determined, which is similar to the step 202, and thus will not be repeated herein.

Step 603, according to an advertisement insertion strategy carried in the playing request of the program, a description file of the advertisement is spliced with a description file of the program, which is similar to the step 203, and thus will not be repeated herein.

Step 604, a description file obtained by splicing is sent to the client by means of the edge node.

In a specific example, the streaming media server 101 sends the description file obtained by splicing to the edge node in the content distribution network, and the edge node stores the description file obtained by splicing, and directly returns the stored description file obtained by splicing to the client 104 upon receiving the playing request of the program the next time.

In a specific example, it is assumed that the edge node in the content distribution network receives the playing request of the program, but does not store the description file obtained by splicing, which corresponds to the playing request of the program, then the edge node can send the playing request of the program to the streaming media server 101, and the streaming media server 101 executes the step 602 and subsequent steps after receiving the playing request of the program.

The above steps 601 and 604 are specific implementations of the steps 601 and 604, respectively.

In the present embodiment, the streaming media server 101 receives, by means of the edge node in the content distribution network, the playing request of the program sent by the client 104, and sends the description file obtained by splicing to the client 104. The edge node in the content distribution network can store the description file obtained by splicing, and return the previously stored description file obtained by splicing to the client 104, and the streaming media server 101 does not need to generate the description file again, such that the workload of the streaming media server 101 can be relieved.

A third embodiment of the present invention relates to an advertisement insertion method, which is applied to the service platform 103. The implementation details of the data processing method of the present embodiment will be specifically described below, and the following contents are only implementation details provided for the convenience of understanding, and are not necessary for implementing the present solution. The specific process is shown in Fig. 7, including:

Step 701, an advertisement insertion strategy is generated according to a playing request of a program sent by a client.

Step 702, the advertisement insertion strategy is sent to the client.

In a specific example, when playing the program, the client 104 can send the playing request of the program to the service platform 103, the service platform 103 can generate the advertisement insertion strategy according to the playing request of the program, and return the advertisement insertion strategy to the client 104, so that the client 104 sends, to the streaming media server 101, the playing request of the program that carries the advertisement insertion strategy, wherein the advertisement insertion strategy can include: an insertion time point of the advertisement in the program, and an insertion time length of the advertisement corresponding to the insertion time point.

In the present embodiment, the service platform 103 generates the advertisement insertion strategy according to the playing request of the program. The client 104 sends, to the streaming media server 101, the playing request of the program that carries the advertisement insertion strategy, so that the streaming media server 101 splices a description file of an advertisement with a description file of the program according to the advertisement insertion strategy carried in the playing request of the program, and sends a description file obtained by splicing to the client 104. In this way, the client 104 performs playing according to the description file obtained by splicing. By means of the present embodiment, it is possible to avoid phenomena such as black screen and circling during switching and playing of the program and the advertisement.

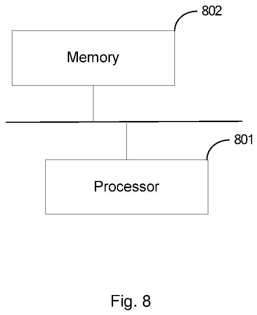

A fourth embodiment of the present invention relates to an electronic device, as shown in Fig. 8, including at least one processor 801, and a memory 802 in communication connection with the at least one processor 801, wherein the memory 802 stores instructions executable by the at least one processor 801, and the instructions are executed by at least one processor 801, so that the at least one processor 801 can execute the above-mentioned advertisement insertion method.

The memory 802 and the processor 801 are connected by a bus, the bus can include any number of interconnected buses and bridges, and the bus connects one or more processors 801 with various circuits of the memory 802 together. The bus can also connect together various other circuits such as peripheral devices, voltage stabilizers and power management circuits, which are well known in the art, and thus will not be described further herein. A bus interface provides an interface between the bus and a transceiver. The transceiver can be a single element or a plurality of elements, such as a plurality of receivers and senders, which provide units for communicating with various other apparatuses over a transmission medium. Data processed by the processor 801 is transmitted on a wireless medium by means of an antenna, and further, the antenna also receives the data and transmits the data to the processor 801.

The processor 801 is responsible for managing the bus and general processing, and can also provide various functions, including timing, peripheral interface, voltage regulation, power management and other control functions. The memory 802 can be used for storing data used by the processor 801 when executing operations.

A fifth embodiment of the present invention relates to a computer-readable storage medium, on which a computer program is stored. When executed by a processor, the computer program implements the above method embodiments.

That is, those skilled in the art can understand that all or part of the steps for implementing the method in the above embodiments can be completed by instructing relevant hardware by means of a program. The program is stored in a storage medium, and includes several instructions for enabling a device (which can be a single chip microcomputer, a chip or the like) or a processor to execute all or part of the steps of the method in the various embodiments of the present invention. The storage medium includes a variety of media capable of storing program codes, such as a USB disk, a mobile hard disk, a read-only memory (ROM), a random access memory (RAM), a magnetic disk, or an optical disk.

Those of ordinary skill in the art can understand that the above embodiments are specific embodiments for implementing the present invention. In practical inventions, various changes can be made in forms and details without departing from the spirit and the scope of the present invention.

**Claims**

1. A method for inserting an advertisement, which is applied to a streaming media server, comprising:

   receiving a playing request of a program sent by a client;
   determining an advertisement that needs to be inserted in the program;

   splicing a description file of the advertisement with a description file of the program according to an advertisement insertion strategy carried in the playing request of the program; and
   sending a description file obtained by splicing to the client, so that the client performs playing according to the description file obtained by splicing.

2. The method according to claim 1, wherein the advertisement insertion strategy comprises: an insertion time point of the advertisement in the program, and an insertion time length of the advertisement corresponding to the insertion time point.

3. The method according to claim 2, wherein the step of according to the advertisement insertion strategy carried in the playing request of the program, splicing the description file of the advertisement with the description file of the program comprises:

   identifying a splicing location of the advertisement in the description file of the program, wherein the total time length of program fragments described by the description file of the program on the splicing location matches the insertion time point;
   recognizing an advertisement description part to be spliced from the description file of the advertisement, wherein the total time length of advertisement fragments described by the advertisement description part matches the insertion time length; and
   splicing the advertisement description part on the splicing location in the description file of the program.

4. The method according to claim 3, wherein the step of identifying the splicing location of the advertisement in the description file of the program comprises:

   according to the sequence of the program fragments described in the description file of the program, accumulating the time lengths of the program fragments one by one; and
   if the total time length obtained by the present accumulation matches the insertion time point, taking a description location of the currently accumulated program fragments in the description file of the program as the splicing location.

5. The method according to claim 3, wherein the step of recognizing the advertisement description part to be spliced from the description file of the advertisement comprises:

   according to the sequence of the advertisement fragments described in the description file of the advertisement, accumulating the time lengths of the advertisement fragments one by one; and if the total time length obtained by the present accumulation matches the insertion time length, taking description information of the advertisement fragments corresponding to the total time length as the advertisement description part to be spliced.

6. The method according to claim 1, wherein the playing request of the program further carries attribute information of the client, and the step of determining the advertisement that needs to be inserted in the program comprises:
in combination with the attribute information of the client, querying, from an advertisement operator, the advertisement that needs to be inserted in the program.

7. The method according to any one of claims 1-6, wherein the step of receiving the playing request of the program sent by the client comprises: receiving the playing request of the program sent by the client by means of an edge node in a content distribution network; and
the step of sending the description file obtained by splicing to the client comprises: sending the description file obtained by splicing to the client through the edge node, so that the edge node stores the description file obtained by splicing, and returns the stored description file obtained by splicing to the client upon receiving the playing request of the program the next time.

8. A method for inserting an advertisement, which is applied to a service platform, comprising:

generating an advertisement insertion strategy according to a playing request of a program sent by a client; and
sending the advertisement insertion strategy to the client, so that the client sends the playing request of the program that carries the advertisement insertion strategy to a streaming media server.

9. The according to claim 8, wherein the advertisement insertion strategy comprises: an insertion time point of the advertisement in the program, and an insertion time length of the advertisement corresponding to the insertion time point.

10. An electronic device, comprising:

at least one processor; and
a memory in communication connection with the at least one processor, wherein,
the memory stores instructions executable by the at least one processor, and the instructions are executed by at least one processor, so that the at least one processor the method for inserting an advertisement as claimed in any one of claims 1-7, or, so that the at least one processor performs the method for inserting an advertisement as claimed in any one of claims 8-9.

11. A computer-readable storage medium, on which a computer program is stored, wherein when executed by a processor, the computer program implements the method for inserting an advertisement as claimed in any one of claims 1-7, or, when performed by the processor, the computer program implements the method for inserting an advertisement as claimed in any one of claims 8-9.

102

Content
management
system

103

Service platform

101

Streaming media
server

104

Client

Fig. 1

201

Content
injection unit

202

Control unit

203

Dynamic
generation unit

Fig. 2

Fig. 3

Advertisement code stream

length1

Inter-cut time length

Program code stream

Program code stream

Offset1/location1

Offset1/location1

Inter-cut time point/splicing location

Inter-cut time point/splicing location

Fig. 4

Fig. 5

Start

601

A playing request of a program sent by a client is received through an edge node in a content distribution network

602

An advertisement to be inserted in the program is determined, which is similar to the step 202, and thus will not be repeated herein

603

According to an advertisement inter-cut strategy carried in the playing request of the program, a description file of the advertisement is spliced with a description file of the program

604

A description file obtained by splicing is sent to the client by means of the edge node

End

Fig. 6

Start

701

An advertisement insertion strategy is generated according to a playing request of a program sent by a client

702

The advertisement insertion strategy is sent to the client

End

Fig. 7

802

Memory

801

Processor

Fig. 8

## INTERNATIONAL SEARCH REPORT

International application No.

**PCT/CN2020/133131**

### A. CLASSIFICATION OF SUBJECT MATTER

H04N 21/2668(2011.01)i; H04N 21/234(2011.01)i; H04N 21/81(2011.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 广告, 拼接, 合并, 插播, 插入, 策略, M3U8, 描述, 节目, 视频, 时长, 时间点, 分片, ad, advertisement, combin+, insert, strategy, descript+, program, video, time, point, length, slice

### C. DOCUMENTS CONSIDERED TO BE RELEVANT

| Category* | Citation of document, with indication, where appropriate, of the relevant passages | Relevant to claim No. |
|---|---|---|
| X | CN 107295376 A (BEIJING YOUPENGPULE TECHNOLOGY CO., LTD.) 24 October 2017 (2017-10-24) <br> description, paragraphs 35-82, figures 1-5 | 1-5, 8-11 |
| Y | CN 107295376 A (BEIJING YOUPENGPULE TECHNOLOGY CO., LTD.) 24 October 2017 (2017-10-24) <br> description, paragraphs 35-82, figures 1-5 | 6, 7 |
| Y | CN 104135678 A (INSPUR GROUP CO., LTD.) 05 November 2014 (2014-11-05) <br> description, paragraphs 7-11 | 6 |
| Y | CN 104394443 A (ORIENTAL CABLE NETWORK CO., LTD. et al.) 04 March 2015 (2015-03-04) <br> description, paragraphs 8-24, figures 1, 2 | 7 |
| A | WO 2012162989 A1 (HUAWEI TECH CO., LTD. et al.) 06 December 2012 (2012-12-06) <br> entire document | 1-11 |
| A | WO 2016187592 A1 (VIVISO INC.) 24 November 2016 (2016-11-24) <br> entire document | 1-11 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 February 2021** | **19 February 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2020/133131** |

| Patent document cited in search report | | | Publication date (day/month/year) | Patent family member(s) | | | Publication date (day/month/year) |
| --- | --- | --- | --- | --- | --- | --- | --- |
| CN | 107295376 | A | 24 October 2017 | None | | | |
| CN | 104135678 | A | 05 November 2014 | None | | | |
| CN | 104394443 | A | 04 March 2015 | None | | | |
| WO | 2012162989 | A1 | 06 December 2012 | CN | 103141113 | A | 05 June 2013 |
| | | | | CN | 103141113 | B | 09 March 2016 |
| WO | 2016187592 | A1 | 24 November 2016 | US | 2016345074 | A1 | 24 November 2016 |

Form PCT/ISA/210 (patent family annex) (January 2015)